# EUROPEAN PATENT SPECIFICATION

(11) **EP 2 348 240 B1**
(45) Date of publication and mention of the grant of the patent: **08.08.2012**
(21) Application number: 09158111.6
(22) Date of filing: 24.01.2005
(51) Int. Cl.: F16L 5/08, F16L 5/14, H02G 3/22

(54) **Sealing system**
Dichtungssystem
Système d'étanchéité

(30) Priority: 30.01.2004 SE 0400180
(43) Date of publication of application: 27.07.2011
(62) Divisional of application: 05704740.9
(73) Proprietor: Roxtec AB, 371 23 Karlskrona (SE)
(72) Inventor: Kreutz, Tomas, 371 64 Lyckeby (SE)
(74) Representative: Karlsson, Leif Gunnar Börje

(56) References cited:
- WO-A1-96/11353
- DE-A1- 4 218 130
- DE-A1- 10 150 075
- DE-A1- 19 622 362
- US-A- 3 282 544

## Description

### Technical Field

The present invention concerns a compression unit to be used in a sealing system further comprising a frame for cable entries, pipe penetrations etc. Specifically, the invention concerns a compression unit easily adaptable to different frames.

### Prior Art

Compression units and frames of this kind are widely used today. They are parts of systems used to seal at cable entries, pipe penetrations etc. In addition to the compression unit and the frame the systems comprise further elements or units to be placed tightly surrounding the cables, pipes etc. Normally a number of cables and/or pipes are to be received in each frame. Thus, a number of units for receiving cables and/or pipes are received in each frame. The units surrounding the cables, pipes etc. are made of a compressible material and the function of the compression unit is to compress said units to give a tight seal. A plate or partition is normally placed between the compression unit and the units for cables and/or pipes as well as between rows of units. The partitions are received slideable in the frame. Systems of this kind are used in many different environments, such as for cabinets, technical shelters, junction boxes and machines. They are used in different industrial environments, such as automotive, telecom, power generation and distribution, as well as marine and offshore.

The sealing systems may have to seal against fluid, gas, fire, rodents, termites, dust, moisture etc., and may receive cables for electricity, communication, computers etc. or pipes for different gases or liquids such as water, compressed air, hydraulic fluid and cooking gas.

The compression unit is normally placed at one end of the frame. Thus, the compression unit will abut against two inner corners of the frame and, therefore the form of the surfaces of the compression unit facing said corners should be adapted to the form of the inner corners. In other embodiments the compression unit is not placed at one end of the frame, in which case the compression unit will abut against a wall of the frame. In order to have a tight seal it is e.g. important that the compression unit firmly abut against the frame in which it is received.

The form of the frames may vary. Some frames have rounded inner corners, while other have straight inner corners. In some frames there may be a mixture of straight and rounded inner corners. As stated above the form of the compression unit should be adapted to the form of the inner corners at which the compression unit is placed. Thus, if the inner corners of the frame are rounded the compression unit should have rounded surfaces facing the inner corners, and if the corners are straight the surfaces of the compression unit should have a straight form. Finally, if the frame has one straight and one rounded inner corner the compression unit should have a corresponding form. In embodiments where the compression unit is not placed at one end, the compression unit should have a straight form on the part abutting the frame wall. Previously compression units of different forms have been used, with one form for each form of the frame. This is of disadvantage regarding e.g. manufacture and stock keeping.

### Summary of the Invention

One object of the present invention is that only one type of compression unit easily adaptable to different frames should be needed.

According to the present invention a sealing system according to claim 1 is furnished. The compression unit is used with a frame also receiving compressible units for pipe penetration and/or cable entry. The compression unit is often to abut against two inner corners of the frame. In other embodiments the compression unit is to abut against two walls of the frame. Supplemental parts are furnished for optional placement between the compression unit and one or both of the inner corners or two walls of the frame, for adapting the form of the compression unit to the form of the inner corners or the walls of the frame.

Further objects and advantages of the present invention will be obvious for a person skilled in the art when reading the detailed description below of one embodiment of the present invention.

### Brief Description of the Drawings

The invention will be explained further below by way of an example and with reference to the enclosed drawings. In the drawings:
Fig. 1 is a side view of a compression unit according to the present invention in a not compressed state;
Fig. 2 is a side view of the compression unit of Fig. 1 in a compressed state;

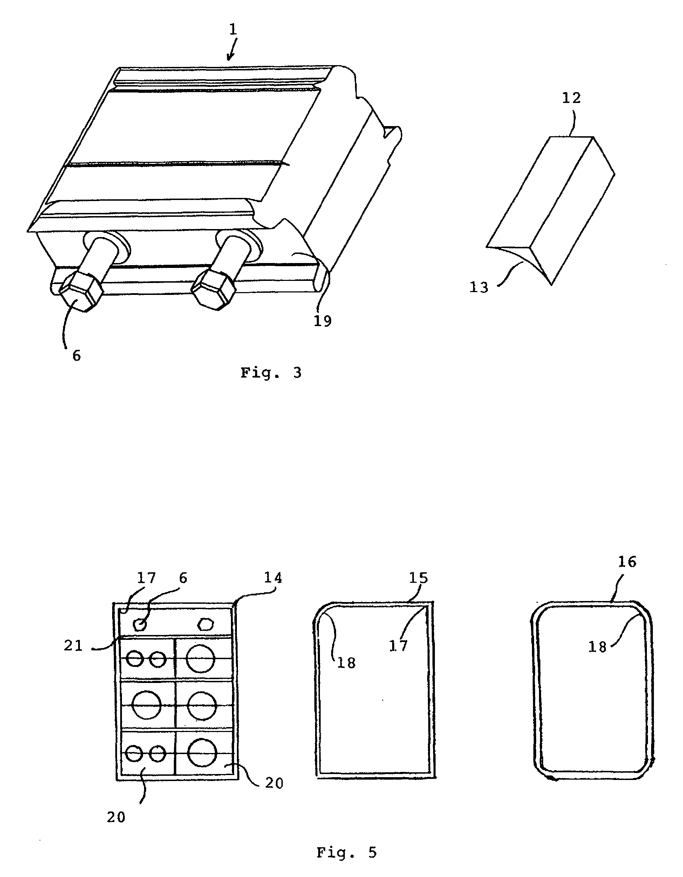

Fig. 3 is a perspective view of the compression unit of Figs. 1 and 2 including supplemental parts;
Fig. 4 is a side view of a component made in one piece, of which the compression unit is formed; and
Fig. 5 is a side view illustrating different frames in which the compression unit of the previous Figs. may be received.

### Detailed Description of Preferred Embodiments

In the Figs. one example of a compression unit 1 is shown in which the present invention is used. A person skilled in the art realises that the exact design of the compression unit 1 is of no importance for the invention as such. The shown compression unit 1 is based on the compression unit of the application WO 96/11353.

The compression unit 1 comprises a first pair of compressible wedges 2, 3, which can be moved towards and away from each other by means of a screw 6. The compression unit 1 further comprises a second pair of compressible wedges 4, 5, which may be moved towards and away from each other in co-action with the first pair of wedges 2, 3.

The screw 6 is received in two sleeves 8, 9. One sleeve 8, 9 in each of the wedges 2, 3 of the first pair. The sleeves 8, 9 are either loose parts inserted and fixed in the wedges 2, 3 or are integrated in the wedges 2, 3, i.e. made in one piece with the wedges 2, 3. The screw 6 has a first thread 10 co-acting with a thread of one of the sleeves 8 and a second thread 11 co-acting with a thread of the other sleeve 9. One of the threads 10, 11 is a righthand thread while the other is a left-hand thread. Thus, depending on the direction of rotation of the screw 6 the wedges 2, 3 of the first pair will move towards or away from each other. A pressure distributing plate 19 having openings for the screws 6 is used to distribute the pressure on the wedges 2, 3 receiving the screws 6.

The first pair of wedges 2, 3 is in contact with the second pair of wedges 4, 5 along inclined surfaces. The inclination of the contact surfaces are such that the second pair of wedges 4, 5 will move away from each other when the first pair of wedges 2, 3 are moving towards each other. When the first pair of wedges 2, 3 move away from each other the second pair of wedges 4, 5 will be moved towards each other.

In use the first pair of wedges 2, 3 moves axially along the screw 6, while the second pair of wedges 4, 5 moves radially towards and away from the screw 6.

The second pair of wedges 4, 5 is given such a form that each wedge 4, 5 has a rounded surface on the side facing an inner corner of a frame 14 receiving the compression unit 1.

The compression unit 1 may be furnished with one or two supplemental parts 12 in use. Each supplemental part 12 has two sides forming a straight corner and a rounded surface 13 to be received on the rounded surface of the compression unit 1. The sides of the supplemental part 12 forming a straight corner are to abut against the inner corner of the frame 14. Thus, if the frame 14 has straight inner corners 17 the supplemental parts 12 are used adapting the compression unit 1 to the straight form of the inner corners 17 of the frame 14. If the compression unit 1 is to be placed at a distance from the ends of the frame 14, the supplemental parts 12 are used adapting the compression unit 1 to the straight form of the walls of the frame 14.

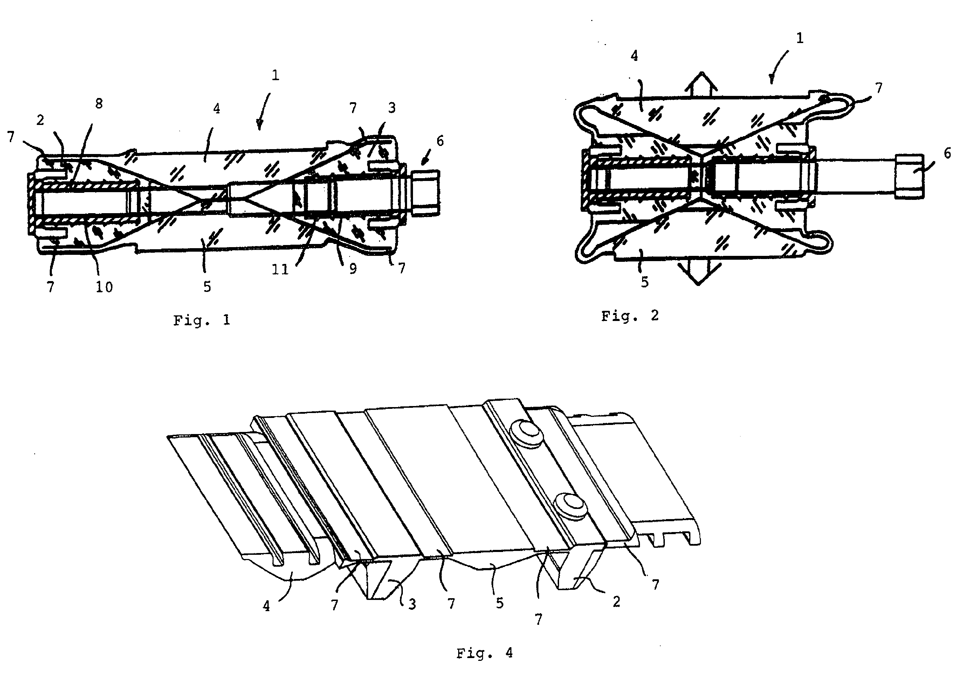

The wedges 2, 3, 4, 5 are held together by a strap 7.
Thus, all the wedges 2, 3, 4, 5 and the strap 7 may be made as a component in one piece, as indicated in Fig. 4.

In some embodiments the supplemental parts are integrated in the component of which the entire compression unit 1 is made. Thus, the complete compression unit 1 including the supplemental parts 12 may be made in one piece. If the supplemental parts are not needed, i.e. if the frame has rounded inner corners, the supplemental parts 11 are torn off before assembly of the compression unit 1. The supplemental parts 12 are attached to the rest of the components in such a way that it is easy to tear off from them. This may be achieved by having a weakening of the strap 7 connecting a supplemental part 12 with the rest, such a weakening may be a perforation, a slit etc. In other embodiments the supplemental parts 12 are lose parts. In the example of Fig. 4 the supplemental parts 12 are not integrated in the component of which the compression unit 1 is formed.

As indicated above the compression unit 1 is to be used in a frame 14 receiving one or more units 20 for receiving cables and/or pipes. The function of the compression unit 1 is to compress all the units 20 in an extent enough to have a tight seal, as is known to a person skilled in the art. Partitions or plates 21 are placed between the compression unit 1 and the units 20 for cables/pipes and also between the separate rows of units 20.

In use the compression unit 1 is placed in the frame with or without the supplemental parts 12. If both inner corners 18 of the frame 16 at which the compression unit 1 is placed are rounded the supplemental parts 12 are not used. If both corners 17 of the frame 14 at which the compression unit 1 is to be placed are straight a supplemental part 12 is placed on each surface of the compression unit 1 facing a corner 17. If one of the corners 17 of the frame 15 is straight while the other 18 is rounded, a supplemental part 12 is only placed on the part of the compression unit 1 facing the straight corner 17. Thus, the same compression unit 1 with or without one or two supplemental parts 12 may be used for frames 14-16 having inner corners 17, 18 with varying form. Furthermore, if the compression unit 1 is not placed at the ends of the frame 14-16 a supplemental part 12 is placed on each surface of the compression unit 1 facing a wall of the frame 14.

Thus, the compression unit 1 is easily adaptable to different frames 14-16, by optional use of the supplemental parts 12.

## Claims

1. A sealing system comprising a frame (14-16), a compression unit (1) and compressible units (20) for pipe penetration and/or cable entry, which compression unit (1) and compressible units (20) for pipe penetration and/or cable entry are received inside the frame, wherein the compression unit comprises a first pair of wedges (2, 3) and a second pair of wedges (4,5), wherein the first pair of wedges (2, 3) is in contact with the second pair of wedges (4, 5) along inclined surfaces, **characterized in that** the wedges (4, 5) of the second pair of wedges (4, 5) each has a rounded surface on the sides facing inner corners of the frame.

2. The sealing system of claim 1, **characterized in that** the frame (15, 16) has at least one rounded inner corner (18).

3. The sealing system of claim 1, **characterized in that** the frame (14, 15) has at least one straight inner corner (17).

4. The sealing system of any of the previous claims **characterized in that** a supplemental part (12) is placed between a rounded surface of the second pair of wedges (4, 5) of the compression unit (1) and a straight inner corner (17) of the frame (14, 15), whereby the supplemental part (12) abuts the inner straight corner (17) of the frame (14, 15).

5. The sealing system of claim 4, **characterized in that** the supplemental part (12) has a general L-shaped cross section, with a rounded surface (13) and two straight sides.

6. The sealing system of claim 5, **characterized in that** the rounded surface (13) of the supplemental part (12) is to abut against one of the rounded surfaces of the compression unit (1).

7. The sealing system of claim 5 or 6, **characterized in that** the straight sides of the supplemental part (12) is to abut against the surfaces of a frame (14, 15) forming a straight inner corner (17) or that one of the straight sides of the supplemental part (12) is to abut a wall of a frame (14-16).

8. The sealing system of claim 1, **characterized in that** the first pair of wedges (2, 3) may be moved by means of a screw (6) towards and away from each other in the axial direction of the screw (6) and the other pair of wedges (3, 4) is moved towards and away from each other in a perpendicular direction to the movement of the first pair and radially to the screw (6) by means of the movement of the first pair of wedges (2, 3).

9. The sealing system of claim 1, **characterized in that** the wedges (2-5) of the compression unit (1) is made in one piece with straps (7) separating the separate wedges (2-5) and that the supplemental parts (12) are included in the component in one-piece.

10. The sealing system of claim 9 and 4, **characterized in that** the supplemental parts (12) are included in the component in one-piece in a way enabling tearing off of the supplemental parts (12).

## Patentansprüche

1. Ein Dichtsystem mit einem Rahmen (14 - 16), einer Kompressionseinheit (1) und komprimierbaren Einheiten (20) für eine Rohreinführung und/oder einen Kabeleintritt, wobei die Kompressionseinheit (1) und die komprimierbaren Einheiten (20) für die Rohreinführung und/oder den Kabeleintritt von dem Inneren des Rahmens aufgenommen sind und wobei die Kompressionseinheit ein erstes Paar von Keilen (2, 3) und ein zweites Paar von Keilen (4, 5) aufweist und wobei das erste Paar von Keilen (2, 3) in Berührung mit dem zweiten Paar von Keilen (4, 5) entlang geneigter Flächen ist, **dadurch gekennzeichnet, dass** die Keile (4, 5) und das zweite Paar von Keilen (4, 5) jeweils eine gerundete Fläche auf jeder der Seitenflächen, die zu den inneren Ecken des Rahmens weisen, hat.

2. Das Dichtsystem nach Anspruch 1, **dadurch gekennzeichnet, dass** der Rahmen (15, 16) wenigstens eine gerundete Innenecke (18) hat.

3. Das Dichtsystem nach Anspruch 1, **dadurch gekennzeichnet, dass** der Rahmen (14, 15) wenigstens eine gerade innere Ecke (17) hat.

4. Das Dichtsystem nach einem der vorangehenden Ansprüche, **dadurch gekennzeichnet, dass** ein zusätzliches Teil zwischen einer gerundeten Fläche des zweiten Paares von Keilen (4, 5) der Kompressionseinheit (1) und einer geraden inneren Ecke (17) des Rahmens (14, 15) angeordnet ist, wobei das zusätzliche Teil (12) gegen die innere gerade Ecke (17) des Rahmens (14, 15) stößt.

5. Das Dichtsystem nach Anspruch 4, **dadurch gekennzeichnet, dass** das zusätzliche Teil (12) einen im Wesentlichen L-förmigen Querschnitt mit einer gerundeten Fläche (13) und zwei geraden Seiten hat.

6. Das Dichtsystem nach Anspruch 5, **dadurch gekennzeichnet, dass** die gerundete Fläche (13) des zusätzlichen Teiles (12) zum Anstoßen gegen eine der gerundeten Flächen der Kompressionseinheit (1) dient.

7. Das Dichtsystem nach Anspruch 5 oder 6, **dadurch gekennzeichnet, dass** die geraden Seiten des zusätzlichen Teils (12) zum Anstoßen gegen die Flächen des Rahmens (14 - 16), der eine gerade innere Ecke (17) ausbildet oder das eine der geraden Seiten des zusätzlichen Teils zum Anstoßen gegen eine Wand des Rahmens (14 - 16) dient.

8. Das Dichtsystem nach Anspruch 1, **dadurch gekennzeichnet, dass** das erste Paar von Keilen (2, 3) mittels einer Schraube (6) in der axialen Richtung der Schraube (6) hin zu und weg von einander bewegt werden kann und dass andere Paar von Keilen (3, 4) hin zu und weg von einander in einer zu der Bewegung des ersten Paares senkrechten Richtung und radial zu der Schraube (6) mittels der Bewegung des ersten Paares von Keilen (2, 3) bewegt wird.

9. Das Dichtsystem nach Anspruch 1, **dadurch gekennzeichnet, dass** die Keile (2 - 5) der Kompressionseinheit (1) in einem Stück mit Streifen (7) gefertigt ist, die die gesonderten Keile (2-5) trennen, gefertigt ist und dass die zusätzlichen Teile (12) in der Komponente einstückig angeordnet sind.

10. Das Dichtsystem nach Anspruch 9 und 4, **dadurch gekennzeichnet, dass** die zusätzlichen Teile (12) in der Komponente in einem Stück in einer Art und Weise, die das Abreißen der zusätzlichen Teile (12) erlaubt, angebracht sind.

## Revendications

1. Système d'étanchéité comprenant un cadre (14-16), une unité de compression (1) et des unités compressibles (20) pour la pénétration de tuyaux et/ou l'entrée de câbles, lesdites unité de compression (1) et unités compressibles (20) pour la pénétration de tuyaux et/ou l'entrée de câbles étant reçues à l'intérieur du cadre, dans lequel l'unité de compression comprend une première paire de coins (2, 3) et une seconde paire de coins (4, 5), dans lequel la première paire de coins (2, 3) est en contact avec la seconde paire de coins (4, 5) le long de surfaces inclinées, **caractérisé en ce que** les coins (4, 5) de la seconde paire de coins (4, 5) possèdent chacun une surface arrondie sur les côtés faisant face aux angles internes du cadre.

2. Système d'étanchéité selon la revendication 1, **caractérisé en ce que** le cadre (15, 16) possède au moins un angle interne arrondi (18).

3. Système d'étanchéité selon la revendication 1, **caractérisé en ce que** le cadre (14, 15) possède au moins un angle interne droit (17).

4. Système d'étanchéité selon l'une quelconque des revendications précédentes, **caractérisé en ce qu'**une pièce complémentaire (12) est placée entre la surface arrondie de la seconde paire de coins (4, 5) de l'unité de compression (1) et l'angle interne droit (17) du cadre (14, 15), moyennant quoi la pièce complémentaire (12) vient en butée contre l'angle interne droit (17) du cadre (14, 15).

5. Système d'étanchéité selon la revendication 4, **caractérisé en ce que** la pièce complémentaire (12) présente une section généralement en forme de L, avec une surface arrondie (13) et deux côtés rectilignes.

6. Système d'étanchéité selon la revendication 5, **caractérisé en ce que** la surface arrondie (13) de la pièce complémentaire (12) doit venir en butée contre l'une des surfaces arrondies de l'unité de compression (1).

7. Système d'étanchéité selon la revendication 5 ou 6, **caractérisé en ce que** les côtés rectilignes de la pièce complémentaire (12) doivent venir en butée contre les surfaces d'un cadre (14, 15) formant un angle interne droit (17) ou **en ce qu'**un des côtés rectilignes de la pièce complémentaire (12) doit venir en butée contre une paroi du cadre (14-16).

8. Système d'étanchéité selon la revendication 1, **caractérisé en ce que** la première paire de coins (2, 3) peuvent être éloignés ou rapprochés l'un de l'autre au moyen d'une vis (6) dans le sens axial de la vis (6) et l'autre paire de coins (3, 4) sont éloignés ou rapprochés l'un de l'autre dans un sens perpendiculaire au mouvement des deux premiers et radialement par rapport à la vis (6) grâce au déplacement de la première paire de coins (2, 3).

9. Système d'étanchéité selon la revendication 1, **caractérisé en ce que** les coins (2-5) de l'unité de compression (1) sont d'un seul tenant avec des bandes (7) séparant les coins séparés (2-5) et **en ce que** les pièces complémentaires (12) sont incluses d'un seul tenant dans le composant.

10. Système d'étanchéité selon les revendications 9 et 4, **caractérisé en ce que** les pièces complémentaires (12) sont incluses d'un seul tenant dans le composant de manière à permettre le détachement des pièces complémentaires (12).
